# EUROPEAN PATENT APPLICATION

(11) **EP 4 575 935 A1**
(43) Date of publication of application: **25.06.2025**
(21) Application number: 23854447.2
(22) Date of filing: 15.08.2023
(51) Int. Cl.: G06N 20/00, G06T 17/00, G06V 40/20

(54) **METHOD AND APPARATUS FOR RECOGNIZING HUMAN BODY ACTION, AND DEVICE AND MEDIUM**

(30) Priority: 19.08.2022 CN 202210999896
(71) Applicant: Beijing Zitiao Network Technology Co., Ltd., Beijing 100190 (CN)
(72) Inventor: LI, Lin, Beijing 100028 (CN)
(74) Representative: Dentons UK and Middle East LLP
(86) International application number: PCT/CN2023/113182
(87) International publication number: WO 2024/037546

(57) **Abstract**

Methods, apparatuses, devices, and medium for recognizing human action are provided. In a method, in response to receiving an input image including a human object, a target action associated with the human object in the input image is determined based on an action model. The action model describes an association relationship between an image including a human object and an action of the human object in the image. The action is represented by a set of spatial points in a virtual human object corresponding to the human object, and a dimension of the virtual human object matches a dimension of the human object. The input image is updated with the virtual human object performing the target action. With the example embodiment of the disclosure, the accuracy of the action model may be improved, such that the action model may recognize the human action in a more accurate and effective manner.

## Description

This application claims the benefit of Chinese Patent Application No. 2022109998963, filed on August 19, 2022, entitled "METHOD, APPARATUS, DEVICE, AND MEDIUM FOR RECOGNIZING HUMAN ACTION", the entire content of which is incorporated herein by reference.

### FIELD

Example embodiments of the present disclosure generally relate to machine learning techniques, and more particularly, to a method, an apparatus, a device, and a computer-readable storage medium for recognizing a human action based on machine learning techniques.

### BACKGROUND

Currently, a large number of augmented reality applications have been developed, allowing a user to capture images of people in a real environment with an image capture device in a device such as a mobile terminal. Furthermore, human actions of individuals may be recognized based on machine learning for controlling augmented reality applications and/or other purposes. Generally speaking, the computing resources of the mobile device are relatively limited, and how to improve the accuracy of human action recognition is an urgent problem to be solved.

### SUMMARY

**In** a first aspect of the present disclosure, a method for recognizing a human action is provided. In the method, in response to receiving an input image including a human object, a target action associated with the human object in the input image is determined based on an action model. The action model describes an association relationship between an image including a human object and an action of the human object in the image. The action is represented by a set of spatial points in a virtual human object corresponding to the human object, and a dimension of the virtual human object matches a dimension of the human object. The input image is updated with the virtual human object performing the target action.

**In** a second aspect of the present disclosure, an apparatus for recognizing a human action is provided. The apparatus includes: a determining module configured to determine, in response to receiving an input image including a human object, a target action associated with the human object in the input image based on an action model, the action model describing an association relationship between an image including a human object and an action of the human object in the image, the action being represented by a set of spatial points in a virtual human object corresponding to the human object, and a dimension of the virtual human object matching a dimension of the human object; and an updating module configured to update the input image with the virtual human object performing the target action.

**In** a third aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect.

**In** a fourth aspect of the present disclosure, a computer-readable storage medium is provided. The medium stores a computer program, and when the computer program is executed by a processor, causes the processor to perform the method of the first aspect.

**It** should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of the various implementations of the present disclosure will become more apparent from the following detailed description taken in conjunction with the accompanying drawings. In the drawings, the same or similar reference numbers refer to the same or similar elements, in which:
FIG. 1 illustrates an example of a human action that may be processed by an implementation of the present disclosure;
FIG. 2 illustrates a block diagram of an example of a training image for training an action model according to some technical solutions;
FIG. 3 illustrates a block diagram of a process for recognizing a human action according to some embodiments of the present disclosure;
FIG. 4 illustrates a block diagram of a coordinate system of various spatial points in a virtual human object according to some embodiments of the present disclosure;
FIG. 5 illustrates a block diagram of a process for configuring a virtual human object based on a training image according to some embodiments of the present disclosure;
FIG. 6 illustrates a block diagram of a process for updating an action model based on a comparison of a training image and a predicted virtual image according to some embodiments of the present disclosure;
FIG. 7 illustrates a block diagram of updating a human object in an input image based on a virtual human object according to some embodiments of the present disclosure;
FIG. 8 illustrates a block diagram of generating an intermediate image including a blurred region according to some embodiments of the present disclosure;
FIG. 9 illustrates a block diagram of a process of adjusting an orientation of aspatial point in a virtual human object according to some embodiments of the present disclosure;
FIG. 10 illustrates a block diagram of a process of generating a virtual human object of a left hand based on a virtual human object of a right hand according to some embodiments of the present disclosure;
FIG. 11 illustrates a flowchart of a method for recognizing a human action according to some embodiments of the present disclosure;
FIG. 12 illustrates a block diagram of an apparatus for recognizing a human action according to some embodiments of the present disclosure; and
**FIG.** 13 illustrates a block diagram of a device capable of implementing various implementations of the present disclosure.

### DETAILED DESCRIPTION

Embodiments of the present disclosure will be described in more detail below with reference to the accompanying drawings. Although certain embodiments of the present disclosure are illustrated in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

**In** the description of implementations of the present disclosure, the terms "including" and similar terms should be understood to include "including but not limited to". The term "based on" should be understood as "based at least in part on". The terms "one implementation" or "the implementation" should be understood as "at least one implementation". The term "some implementation s" should be understood as "at least some implementations". Other explicit and implicit definitions may also be included below. As used herein, the term "model" may represent an association relationship between various data. For example, the association relationship may be obtained based on various technical solutions currently known and/or to be developed in the future.

**It** may be understood that the data involved in the technical solution (including but not limited to the data itself, the acquisition or use of the data) should follow the requirements of the corresponding laws and regulations and related regulations.

**It** may be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to acquire and use the personal information of the user. Therefore, the user may autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

**It** may be understood that the foregoing notification and obtaining a user authorization process is merely illustrative, and does not constitute a limitation on implementations of the present disclosure, and other manners of meeting related laws and regulations may also be applied to implementations of the present disclosure.

### Example Environment

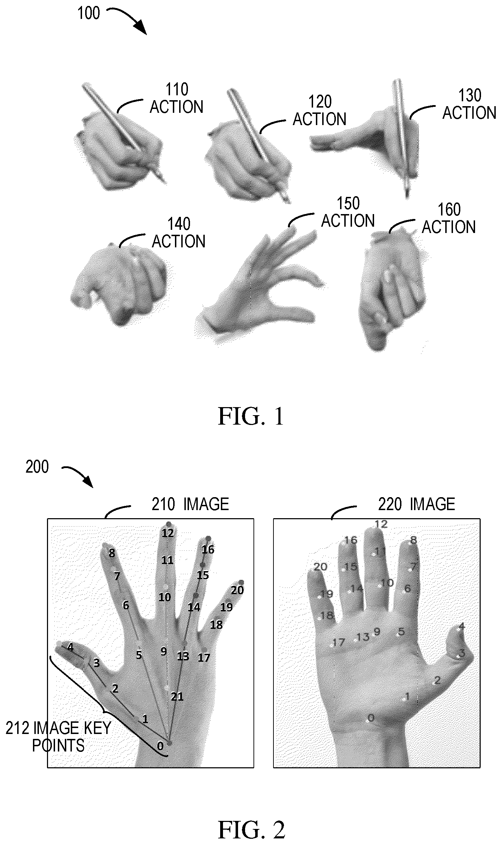

Various augmented reality applications have been developed. For example, the human action of the user may be acquired and recognized by the image capture device. Furthermore, the recognized human action may be configured to control various objects in the augmented reality application. In the following, the outline of human action recognition will be described first with reference to FIG. 1. FIG. 1 illustrates an example 100 of human actions that may be processed by an implementation of the present disclosure.

**It** will be understood that the human object may include various parts of human body, including but not limited to a torso, limbs, head, hands, etc. In the context of the present disclosure, only the hands will be used as an example of the human object to describe details of the process of recognizing the human action. As illustrated in FIG. 1, the hand may perform a variety of actions, such as actions 110, 120, and 130 involving writing actions, actions 140, 150, and 160 involving other actions. It will be appreciated that the acts illustrated in FIG. 1 are merely illustrative, and the user may control their fingers to make any other action.

At present, technical solutions for recognizing the human action based on machine learning have been proposed. For example, a plurality of key points may be respectively marked at a plurality of predetermined positions of the hand. The hand image may be acquired, and an action model may be trained with the hand image with the mark. FIG. 2 illustrates a block diagram 200 of an example of a training image for training an action model according to some technical solutions.

As illustrated in FIG. 2, the image 210 illustrates an image of the back of a right hand, where key points such as 0 to 20 may be marked on the hand (e.g., each joint point of the hand may be configured with the key point), and the hand image may be simplified to include a tree structure defined by the key points 0 to 20. The image 220 illustrates an image of a palm of the right hand. The image 220 also includes predefined key points 0 to 20. It will be appreciated that the positions of the key points in the hand are fixed and do not change with different actions. For example, the key point 0 is always located at the wrist joint point, and the key point 4 is always located at the tip of the thumb, etc.

According to a technical solution, a three-dimensional model of a virtual object of the hand may be pre-established, and an action model may be used to represent a correspondence between the key points in the hand image and spatial positions of corresponding key points in the three-dimensional model. However, there may be differences between the hand in the hand image used as training data and the hand in the three-dimensional model. Assuming that the shape of the hand in the three-dimensional model is slender, while the shape of the hand in the training data is short and thick, it will result in the trained action model being unable to accurately recognize the hand action. In other words, when the hand action is recognized with the trained action model, there may be a situation where the key points may not be accurately determined, leading to recognition of incorrect actions. In this case, how to recognize the human action in a more convenient and effective manner becomes an urgent problem to be solved.

### Summary process of recognizing human actions

To address the shortcomings in the foregoing technical solution, according to an example embodiment of the present disclosure, a method for recognizing a human action is provided. Generally, an action model describing an association relationship between an image including a human object and an action of the human object in the image may be acquired. It will be understood that the action here is represented by a set of spatial points in a virtual human object corresponding to the human object, and a dimension of the virtual human object matches a dimension of the human object. In the context of the present disclosure, when a virtual object of the hand is established, the dimension of the hand used as the training data needs to be considered. In other words, based on the dimension (for example, including size, proportion, posture, etc.) of the hand in the training image, a three-dimensional virtual human object of the hand may be established according to the same size, proportion, and posture. According to an example embodiment of the present disclosure, a trained action model may be directly received. Alternatively, and/or additionally, the action model may be trained based on machine learning techniques.

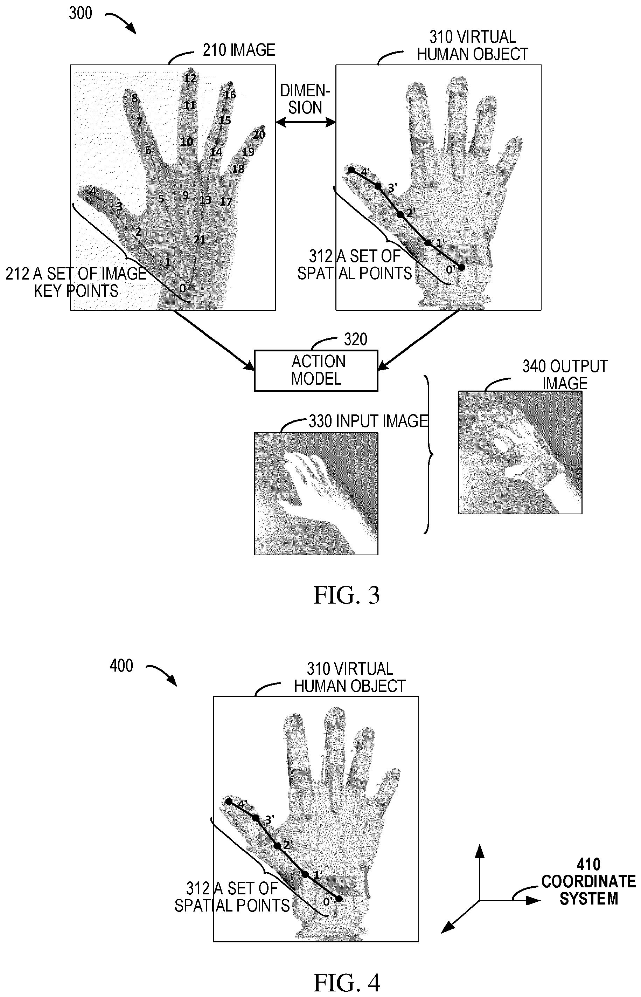

With reference to FIG. 3, the outline of example embodiment of the present disclosure is described. FIG. 3 illustrates a block diagram 300 of a process for recognizing a human action according to some embodiments of the present disclosure. As illustrated in FIG. 3, the input image 330 may be processed based on an action model 320 that describes an association relationship between an image including a human object and an action of the human object in the image. Specifically, when the input image 330 including the human object is received, a target action associated with the human object in the input image 330 may be determined based on the action model 320. Furthermore, with the virtual human object performing the target action, the input image may be updated to generate a new output image 340.

**It** will be understood that the action model 320 here may describe the association relationship between the image including the human object and the action of the human object in the image. The action is represented by a set of spatial points in a virtual human object corresponding to the human object, and the dimension of the virtual human object matches the dimension of the human object. To obtain the action model 320, a set of image key points 212 in the image 210 including the human object may be obtained. According to an example embodiment of the present disclosure, the image 210 may be selected from a set of training images. For example, a front-view image or a back-view image including the full view of the hand may be selected. It will be understood that each image in the set includes a set of pre-labeled image key points. In this way, dimension information of various parts of the hand may be obtained as much as possible, and then a virtual human object with higher accuracy may be established.

Furthermore, the virtual human object 310 corresponding to the human object may be generated based on the dimension of the human object. As illustrated in FIG. 3, the virtual human object 310 may include a set of spatial points 312 corresponding to the set of image key points 212 in the image 210, respectively. It will be understood that for the sake of simplicity, the set of spatial points 312 in the virtual human object 310 in FIG. 3 only illustrates spatial points 0' to 4' (corresponding to the key points 0 to 4 in the image 210, respectively) related to the thumb. The virtual human object 310 may further include other spatial points corresponding to further key points 5 to 20 in the image 210.

As illustrated in FIG. 3, when the virtual human object 310 is established, based on the dimension of the hand in the image 210, a virtual hand model with the same size, proportion and posture as the real hand may be established. Specifically, the hand in the virtual human object 310 may be made to coincide with the hand in the image 210. That is, when the virtual human object 310 of the hand is established, the various joint point in the virtual human object 310 may be aligned with the various joint point of the hand in the image 210. In this way, it may be ensured that the orientations of the two hands are consistent, and their length-to-width ratios are as similar as possible.

**Furthermore,** the action model 320 may be determined based on the set of image key points 212 and the set of spatial points 312. Here, the action model 320 may describe the association relationship between the image including the human object and the action of the human object in the image. It will be appreciated that the action here is represented by the set of spatial points 312 in the virtual human object 310. That is, when the set of spatial points 312 is determined, the action of the hand is determined. Furthermore, the input object 330 including the virtual human object 310 may be processed with the action model 320. Specifically, the virtual human object 310 may be caused to perform the determined action and update the input image 330 accordingly.

With the example implementation of the present disclosure, since the hand in the virtual human object 310 and the hand in the image 210 have the same dimension, the positions and orientations of the set of image key points 212 and the set of spatial points 312 may be accurately in one-to-one correspondence. In this way, the virtual human object 310 may more realistically simulate the action of the hand in the image 210, thereby improving the accuracy of the action model 320.

### Detailed process of recognizing human actions

The summary of recognizing the human action has been described with reference to FIG. 3, more details regarding recognizing the human action will be provided below. According to an example embodiment of the present disclosure, in the process of generating the virtual human object, the size of the virtual human object 310 needs to be considered first. Specifically, the action model 320 may be obtained with the training image. For example, a position relationship of the set of image key points 212 may be determined based on the dimension of the human object in the image 210. In other words, the distances between various key points may be determined, and then relative positions between various spatial points in the virtual human object 310 may be determined. With the example implementation of the present disclosure, the action may be described based on the virtual human object that is consistent in size, proportion, and posture with the human object. In this way, in this way, the accuracy of the action model 320 may be improved, thereby improving the accuracy of subsequent processing.

**In** the image 210, it is assumed that a distance between the key point 0 and the key point 1 is 4cm, a distance between the key point 1 and the key point 2 is 5cm, a distance between the key point 2 and the key point 3 is 3.5 cm, and a distance between the key point 3 and the key point 4 is 2.5 cm. The positions of various spatial points in the set of spatial points 312 may be determined based on the distances described above. In other words, in the generated virtual human object 310, a distance between the spatial point 0' and the spatial point 1' is 4cm, a distance between the spatial point 1' and the spatial point 2' is 5cm, a distance between the spatial point 2' and the spatial point 3' is 3.5 cm, and a distance between the spatial point 3' and the spatial point 4' is 2.5 cm. In this way, it may be ensured that the size of the virtual human object 310 is consistent with the real hand in the image 210, thereby improving the accuracy of the subsequent determination of the action model 320.

**It** will be understood that, in addition to the position of the spatial point, the orientations of various spatial points will affect the posture of the virtual human object 310. It will be understood that, since the image key point is located at the joint point of the hand of the image 210 and the spatial point is located at the joint point of the virtual human object 310, the posture of the hand in the virtual human object 310 may not be uniquely determined based merely on the spatial point. In this case, the orientations of various image key points need to be considered, and then the orientations of various spatial points are determined based on the orientations.

According to an example embodiment of the present disclosure, a reference coordinate system may be established based on various manners, thereby representing the orientations of various spatial points. More information about determining the orientation of the spatial point will be described below with reference to FIG. 4. FIG. 4 illustrates a block diagram 400 of a coordinate system of various spatial points in the virtual human object according to some embodiments of the present disclosure. As illustrated in FIG. 4, an individual reference coordinate system may be established for each spatial point. Specifically, the orientation of the set of spatial points 312 may be determined based on the orientation relationship of the set of image key points 212 in the dimension of the human object.

For example, a coordinate system 410 may be established for the spatial point 0', and the origin of the coordinate system 410 may be located at the position of the spatial point 0'. The coordinate system 410 may be established based on various manners. For example, the direction of the X-axis may be defined as pointing to the right, and the coordinate system 410 may be established based on a left-hand coordinate system and/or a right-hand coordinate system. Furthermore, each spatial point may be processed in a similar manner, and the orientation of each spatial point is determined. In this case, the directions of the coordinate axes of the various spatial points may be consistent. For example, the X-axis may point to the right, the Y-axis may point upward and outward from the screen. Alternatively, and/or additionally, the directions of the coordinate axes of the various spatial points may be inconsistent, and the orientation of the spatial points may be determined based on the wrist orientation of the real person in the hand image in the image 210. For example, the direction of the X-axis of the spatial point 1' may point to the spatial point 0', and the direction of the X-axis of the spatial point 2' may point to the spatial point 1', etc.

According to an example embodiment of the present disclosure, the orientation may be represented based on a plurality of formats. For example, the orientation may be represented based on an attitude angle (i.e., yaw, pitch, and roll). Alternatively, and/or additionally, the orientation may be represented based on a quaternion, etc. With the example implementation of the present disclosure, it may be ensured that the orientations of various fingers of the virtual human object 310 are consistent with the real hand, and it may be ensured that the lengths of various bone segments of the virtual human object 310 are also consistent with the real hand. In this way, the hand in the virtual human object 310 and the hand in the image 210 may be as consistent as possible, thereby improving the accuracy of subsequent determination of the action model 320.

According to an example embodiment of the present disclosure, the set of key points 212 includes a set of joint points of the human object respectively, and the set of spatial points 312 includes a set of joint points of the virtual human object respectively corresponding to the set of joint points of the human object. In this way, the key points and the spatial points are respectively configured at the joint points of the real hand and the virtual human object 310, such that the virtual human object 310 may more accurately simulate the action of the real hand. As the real hand moves, the spatial point may adopt the corresponding orientation. According to an example embodiment of the present disclosure, a threshold of the orientation of the spatial point may be configured according to the action range limitation of the human bone. In this way, the virtual human object 310 may more accurately simulate the action of the real hand.

According to an example embodiment of the present disclosure, the distance between the two spatial points is determined based on the distance between the key points, and the distance between the two spatial points does not change with the hand action. In other words, it may be considered that the bone between two spatial points of the virtual human object 310 is a rigid body, and will not be stretched or compressed. In this way, only the orientations of the various spatial points need to be considered to accurately describe the various spatial points, and then the overall posture of the virtual human object 310 is described.

According to an example embodiment of the present disclosure, after the virtual human object 310 aligned with the hand in the image 210 is determined, the action model 320 may be determined with the set of image key points 212 and the set of spatial points 312. In other words, the orientation of various spatial points in the virtual human object 310 may be determined based on the image 210, and then the action model 320 may be obtained. According to an example embodiment of the present disclosure, the action model 320 may be obtained based on machine learning techniques. The training process may be performed based on an initial action model and/or a pre-trained action model.

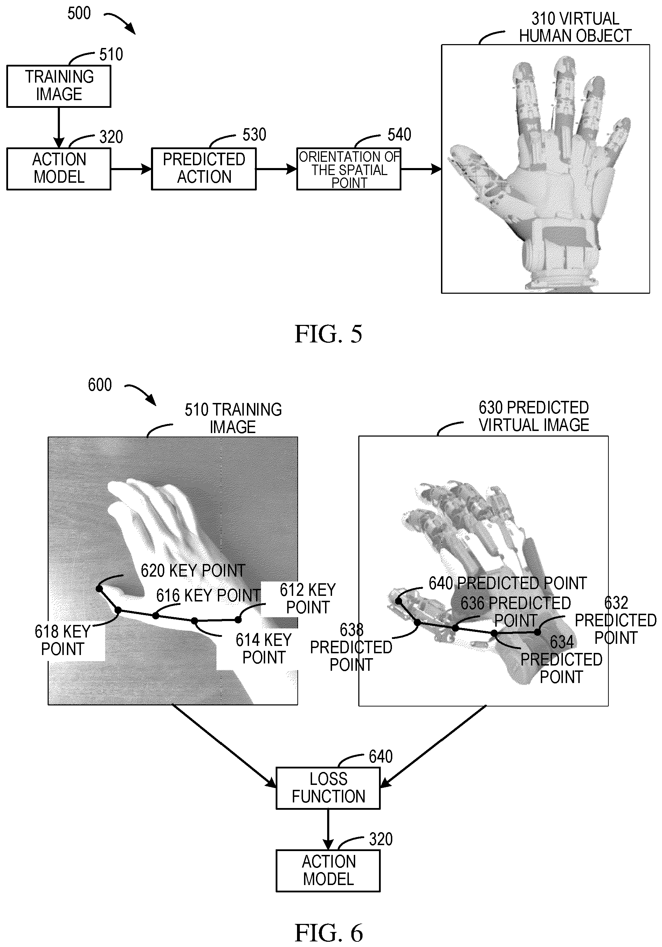

According to an example embodiment of the present disclosure, the action model 320 may be optimized with a large number of training images in the training image set. Specifically, the action model 320 may be utilized to process a given training image that includes the human object, and the action model 320 is updated based on the comparison of the processing result to the given training image. More details according to an embodiment of the present disclosure will be described below with reference to FIG. 5. FIG. 5 illustrates a block diagram 500 of a process for configuring the virtual human object 310 based on a training image according to some embodiments of the present disclosure. As illustrated in FIG. 5, the training image 510 may be obtained from the training image set. Specifically, the training image 510 may be input to the action model 320 to determine the predicted action 530 of the human object in the training image 510. In this process, a set of joint points in the training image 510 may be obtained, and the set of joint points may be input to the action model 320 to determine the predicted action 530.

**It** will be understood that the predicted action 530 here is described with a set of spatial points (i.e., joint points) in the virtual human object 310, and the action model 320 may output the orientation 540 of various spatial points in the virtual human object 310. In this case, the orientation of the set of joint points of the virtual human object 310 may be configured respectively as the orientation 540 of the predicted spatial point. In the context of the present disclosure, once the orientation of the joint point is determined, the positions of various joint points may be determined automatically according to the distances between the various joint points. Therefore, the posture of the virtual human object 310 in the three-dimensional virtual space may be determined, i.e., the predicted action 530 of the virtual human object 310 may be determined.

According to an example embodiment of the present disclosure, a predicted virtual image of the virtual human object 310 may be determined based on the predicted action 530, i.e., the predicted virtual image of the virtual human object 310 may be determined based on the set of configured joint points. More details regarding the predicted virtual image will be described below with reference to FIG. 6. FIG. 6 illustrates a block diagram 600 of a process for updating the action model based on the comparison of the training image and the predicted virtual image according to some embodiments of the present disclosure. As illustrated in FIG. 6, the predicted virtual image 630 refers to an image obtained by projecting the virtual human object 310 in a three-dimensional space onto a two-dimensional space. Specifically, based on the spatial position relationship between the camera and the real hand when the training image 510 is captured, the position relationship between the virtual camera and the virtual human object 310 in the three-dimensional space may be determined, and then the predicted virtual image 630 may be obtained.

Furthermore, the predicted virtual image 630 may be compared with the portion associated with the human object in the training image 510 (i.e., the positions of the various joint points of the hand in the virtual image 630 and the training image 510 are compared), to update the action model 320. According to an example embodiment of the present disclosure, a loss function may be determined based on the comparison of the two images. In the following, only the joint points related to the thumb of the hand will be used as examples for description.

As illustrated in FIG. 6, the training image 510 may include key points 612, 614, 616, 618, and 620. In this case, the lines connecting the various key points may form the bones related to the thumb. Similarly, in the predicted virtual image 630, there may be predicted image spatial points (referred to as predicted points for brevity) corresponding to the above key points. For example, the predicted virtual image 630 may include the predicted points 632, 634, 636, 638, and 640 located at the joint point of the thumb in the virtual human object 310. With example implementations of the present disclosure, the positions of various joint points may describe the contour of the hand action. By describing the action with the predicted point associated with the joint point, only the primary factors affecting the hand action may be considered and the secondary factors (e.g., the contour point of the muscle, etc.) is ignored. In this way, the amount of computation involved in determining the action model 320 may be reduced and performance may be improved.

According to an example embodiment of the present disclosure, the above key points may be compared with the corresponding predicted points respectively, to determine the distance between them. For example, a distance between the key point 612 and the predicted point 632 at the wrist may be determined, a distance between the key point 612 and the predicted point 632 at the palm may be determined, a distance between the key point 616 and the predicted point 636 at the base of the thumb may be determined, a distance between the key point 618 and the predicted point 638 at the joint point of the thumb may be determined, etc. The loss function 640 of the action model 320 may be configured based on these distances. For example, the loss function 640 may be configured based on the sum, the variance of the various distances, and/or other manners.

According to an example embodiment of the present disclosure, the various parameters in the action model 320 may be updated by minimizing the loss function 640. It will be understood that although FIG. 6 only illustrates the joint points related to the thumb in the hand, the joint points related to other fingers in the hand may be processed in a similar manner, and the distance between the key points and the predicted points at each joint points may be determined. In this way, the positions of various joint points in the hand may be comprehensively considered, allowing the action model 320 to learn the related knowledge of the hand action in the training image 510 more accurately. According to an example embodiment of the present disclosure, the action model 320 may be continuously trained in an iterative manner. The training stop condition may be preset, for example, the training may be stopped when the number of training iterations reaches a predetermined threshold, the training may be stopped when the action model 320 satisfies a threshold convergence condition, etc.

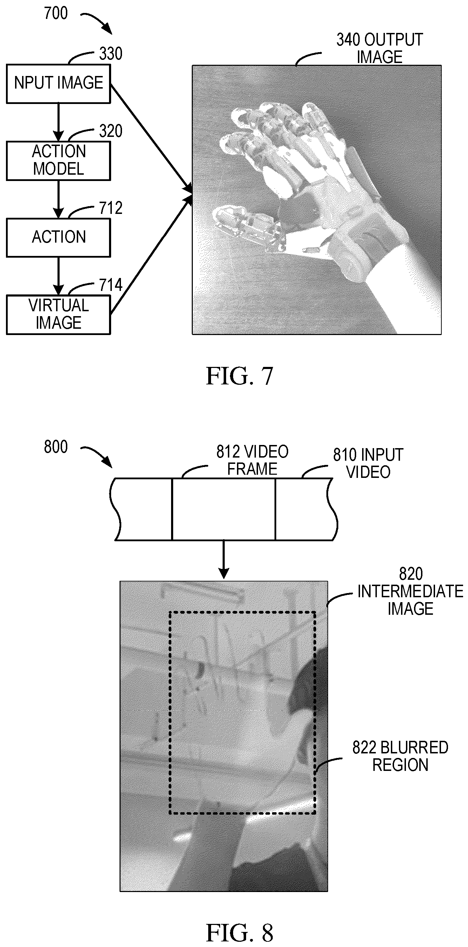

The training process for generating the action model 320 are described, after the action model 320 is obtained, the action model 320 may be utilized to recognize the action of the human object in the input image 330. More details for processing the input image with the action model 320 will be described below with reference to FIG. 7. FIG. 7 illustrates a block diagram of updating a human object in an input image based on a virtual human object according to some embodiments of the present disclosure.

As illustrated in FIG. 7, when the input image 330 including the hand is received, the input image 330 may be provided to the action model 320, to determine the action 712 of the hand. Furthermore, the orientation of the joint point of the virtual human object 310 may be configured based on the action 712 of the hand. Then, the virtual human object 310 may be projected to the two-dimensional image space, and a corresponding virtual image 714 may be generated (in this case, the virtual human object 310 is configured to perform the action 712). Then, the generated virtual image 714 may be utilized to replace the portion associated with the hand in the input image 330, to generate the output image 340.

As illustrated in FIG. 7, in the output image 340, the real hand has been replaced with a robotic hand of the virtual human object 310, and the action of the robotic hand is determined based on the action of the real hand in the input image 330. Alternatively, and/or additionally, it will be understood that although the processes of recognizing the action, generating the virtual image, and replacing the human object in the input image with the generated virtual image are described above, a module for performing the above processes may be integrated into the action model 320. In this case, the integrated action model 320 may directly receive the input image 330 and provide the corresponding output image 340.

With the example implementations of the present disclosure, the virtual human object 310 used by the action model 320 is established based on the dimension of the hand in the training image, thus factors such as the bone size, the proportion, and the postures of various joint points in the virtual human object 310 are consistent with the real hand in the training image. In this way, the action model 320 may accurately obtain the action knowledge of the real hand in the training image, such that the virtual human object 310 may accurately simulate the action of the real hand. Thus, the robotic hand in the output image 340 may simulate hand actions in the input image 330 in a more accurate and efficient manner.

According to an example embodiment of the present disclosure, the size of the robotic hand in the output image 340 may be adjusted based on the size of the real hand. Assuming that the virtual human object 310 is generated based on a training image set including images of adult hands, the size of the generated robotic hand will be consistent with that of the adult hand. In the case where the input image 330 includes a child's hand, when the child's hand is directly replaced with the robotic hand image of the adult, it will lead to a mismatch between the robotic hand and the body proportion of the child. In this case, based on the size of the child hand in the input image 330, the size of the robotic hand may be adjusted, such that the robotic hand in the output image 340 may match the body proportion of the child.

**It** will be appreciated that while FIG. 7 illustrates an example of processing a single input image 330 and replacing the real hand in the input image 330 with the robotic hand. Alternatively, and/or additionally, a continuous video captured in real time may be input to the action model 320. In this case, each action in the continuous video may be recognized in real time with the action model 320. Furthermore, a continuous video including the robotic hand performing various actions may be output. In this case, the real hand in the input video has been replaced by the robotic hand, and the action of the robotic hand is consistent with the action of the real hand.

According to an example embodiment of the present disclosure, when the continuous video is processed, the movement distance of the person's hand in the input video may be significant. In this case, the region of the person's hand may be replaced based on background regions in successive video frames. In other words, the real hand may be removed from the input video first. More details about removing the real hand will be described below with reference to FIG. 8. FIG. 8 illustrates a block diagram 800 of generating an intermediate image including a blurred region according to some embodiments of the present disclosure.

As illustrated in FIG. 8, the various video frames (e.g., a video frame 812) in the input video 810 may be processed to generate an intermediate image 820. Specifically, based on the background image of the ceiling in the video frame preceding the video frame 812, the image within the region including the real hand may be processed, to generate the blurred region 822. In the blurred region 822, the image of the real hand has been removed, and the portion originally blocked by the real hand has been updated with the image of the ceiling portion. In this way, the image of the real hand may be removed in advance, thereby avoiding the situation where the generated robotic hand does not fully block the real hand.

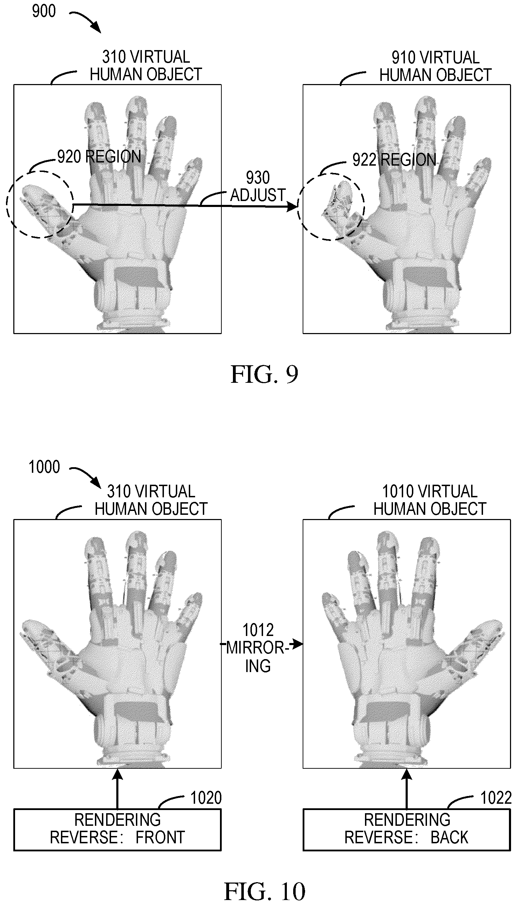

The process of training and using the action model 320 has been described above. In the above process, when it is found that the action determined by the action model 320 does not accurately reflect the action of the real hand, a more accurate action recognition effect may be obtained by adjusting the joint point of the virtual human object 310. More details of adjusting the virtual human object 310 will be described below with reference to FIG. 9. FIG. 9 illustrates a block diagram 900 of a process of adjusting an orientation of the spatial point in the virtual human object according to some embodiments of the present disclosure.

As illustrated in FIG. 9, the virtual human object 310 represents the original virtual human object established based on the image 210, and the virtual human object 910 represents the adjusted virtual human object. In the virtual human object 310, the bone of the thumb portion remains approximately in a line form. In the predicted virtual image obtained with the action model 320, it is assumed that the thumb portion presents an incorrect gesture of rotating outward, the portion within the region 920 (as indicated by the arrow 930) may be adjusted. For example, the joint points of the thumb portion of the virtual human object 310 may be rotated inward, i.e., the orientations of the various joint points at the base of the thumb may be adjusted, to rotate them inward by a predetermined angle (as illustrated in the region 922).

According to an example embodiment of the present disclosure, the above adjustment process may be performed in a training process. Specifically, the predicted virtual image determined with the action model 320 may be compared with the portion associated with the human object in the training image, when the occurrence of the incorrect gesture reaches a certain number or proportion, the above adjustment action may be performed. Alternatively, and/or additionally, the above adjustment process may be performed during the use of the action model 320. In this way, data from more input images may be continuously utilized to further improve accuracy of action recognition.

When the adjusted virtual human object 910 is utilized, since the thumb portion in the region 922 has been rotated inward by the predetermined angle, the inward rotation angle may counteract the error in the outward rotation angle of the corresponding joint point recognized by the action model 320, allowing the orientation of the thumb in the output image matches the orientation of the thumb in the input image as much as possible. With the example implementation of the present disclosure, the deficiency in the action recognized by the action model 320 may be compensated by adjusting the posture of the virtual human object 310. In this way, the action matching between the robotic hand in the output image and the real hand in the input image 330 may be improved.

**It** will be understood that since the human structure has symmetry, only the virtual human object on the left side or the right side may be established. When it is recognized that the human object in the input image 330 is located on the opposite side, the virtual human object may be mirrored to the other side, and then action recognition may be performed. More details about the mirroring process will be described below with reference to FIG. 10. FIG. 10 illustrates a block diagram 1000 of a process of generating a virtual human object of a left hand based on the virtual human object of a right hand according to some embodiments of the present disclosure.

The portion of the human object in the input image 330 may be determined first. When the direction of the portion (e.g., the left hand) does not match the direction of the generated virtual human object 310 (e.g., the right hand), the virtual human object 1010 in the other direction (left hand) may be obtained based on the mirroring 1012. In this case, the action of the left hand may be recognized with the action model 320 and the virtual human object 1010.

**It** will be understood that in the rendering process of some renderers, due to the configuration attribute of unidirectional rendering of the used material, the rendering directions of the materials of the left hand and the right hand are opposite in this case. Thus, the rendering direction needs to be updated based on the portion of the virtual human object. As illustrated in FIG. 10, assuming that the rendering direction 1020 of the virtual human object 310 for the right hand is "front", then the rendering direction 1022 of the virtual human object 1010 for the left hand may be updated to "back". In this way, it may be ensured that the material of the robotic hand is correctly rendered in the rendering process, thereby generating the correct virtual image.

**It** will be understood that although the action recognition process is described above with the right hand as an example of the human object, the above process may be applied to recognize other human objects. For example, actions of the human torso, limb actions, head actions, etc., may be recognized. In addition, although the specific application environment using the action model 320 is described above with the recognized hand action to control the robotic hand as an example, the technical solutions described above may also be applied in other application environments. For example, the recognized human action may be utilized to perform device control, such as controlling the speaker volume or display brightness of the electronic device. As a further example, the recognized human action may be utilized to control the virtual character in the game. As a yet further example, various virtual human objects may be controlled in the augmented reality application, etc.

### Example Processes

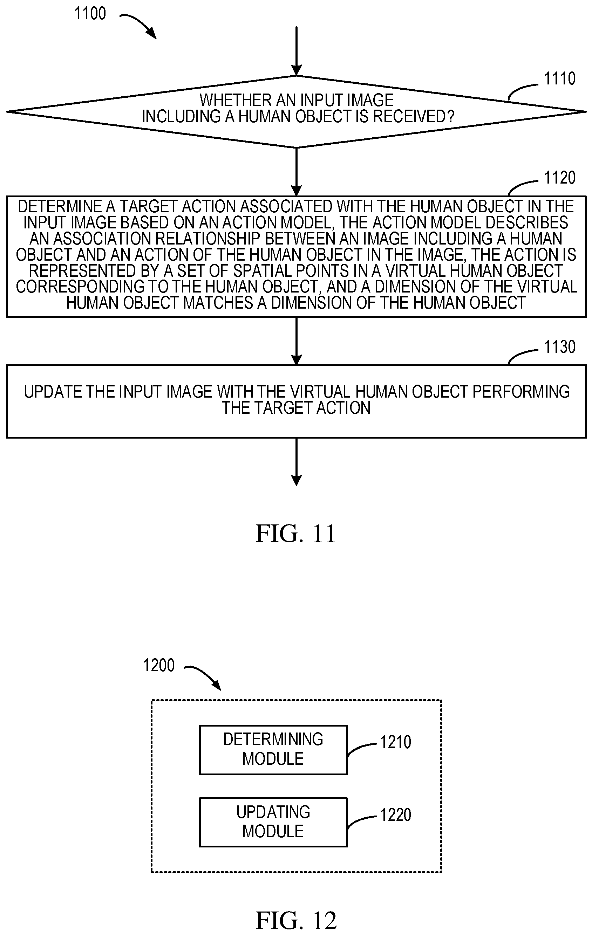

FIG. 11 illustrates a flowchart of a method 1100 for recognizing a human action according to some embodiments of the present disclosure. Specifically, at block 1110, it is determined whether an input image including a human object is received. When the input image is received, the method 1100 proceeds to block 1120, and a target action associated with the human object in the input image is determined based on an action model. Here, the action model describes an association relationship between an image including a human object and an action of the human object in the image. The action is represented by a set of spatial points in a virtual human object corresponding to the human object, and a dimension of the virtual human object matches a dimension of the human object. At block 1130, the input image is updated with the virtual human object performing the target action.

According to an example embodiment of the present disclosure, updating the input image includes determining a target virtual image of the virtual human object based on the target action, the virtual human object being configured as the target action; and replacing a portion associated with the human object in the input image with the target virtual image.

According to an example embodiment of the present disclosure, determining the target virtual image includes determining a body part of the human object in the input image; updating a rendering direction of a material of the virtual object based on the body part; and generating the target virtual image based on the updated rendering direction.

According to an example embodiment of the present disclosure, the method further includes: representing the dimension of the human object based on a first set of image key points in a first training image including the human object; generating the virtual human object based on the dimension of the human object, the virtual human object including the set of spatial points respectively corresponding to the first set of image key points; and determining the action model based on the first set of image key points and the set of spatial points.

According to an example embodiment of the present disclosure, generating the virtual human object includes at least one of: determining a position of the set of spatial points based on a position relationship of the first set of image key points; and determining an orientation of the set of spatial points based on an orientation relationship of the first set of image key points.

According to an example embodiment of the present disclosure, the first set of image key points respectively corresponds to a set of joint points of the human object, and the set of spatial points includes a set of joint points respectively corresponding to the virtual human object associated with the set of joint points of the human object.

According to an example embodiment of the present disclosure, obtaining the action model includes: determining a predicted action of the human object in a second training image based on the action model and the second training image including the human object; determining a predicted virtual image of the virtual human object based on the predicted action; and updating the action model based on a comparison of the predicted virtual image and a portion associated with the human object in the second training image.

According to an example implementation of the present disclosure, determining the predicted action includes obtaining a set of joint points of the human object in the second training image; and determining the predicted action based on the set of joint points of the human object in the second training image and the action model.

According to an example embodiment of the present disclosure, the predicted action is represented with a set of predicted spatial points of the virtual human object, and determining the predicted virtual image includes configuring an orientation of the set of joint points of the virtual human object respectively as an orientation of the set of predicted spatial points; and determining the predicted virtual image of the virtual human object based on the set of configured joint points.

According to an example embodiment of the present disclosure, updating the action model includes determining a set of predicted image spatial points in the predicted virtual image that respectively correspond to the set of joint points; and updating the action model based on a distance between a predicted image spatial point in the set of predicted image spatial points and a corresponding image key point in the second set of image key points.

According to an example embodiment of the present disclosure, the method 1100 further includes: adjusting the orientation of the set of spatial points of the virtual human object based on the comparison of the predicted virtual image and the portion associated with the human object in the second training image.

### Example Apparatus and device

FIG. 12 illustrates a block diagram of an apparatus 1200 for recognizing a human action according to some embodiments of the present disclosure. The apparatus 1200 includes a determining module 1210 configured to determine, in response to receiving an input image including a human object, a target action associated with the human object in the input image based on an action model. Here, the action model describes an association relationship between an image including a human object and an action of the human object in the image. The action is represented by a set of spatial points in a virtual human object corresponding to the human object, and a dimension of the virtual human object matches a dimension of the human object. The apparatus 1200 further includes: an updating module 1220, configured to update the input image with the virtual human object performing the target action.

According to an example embodiment of the present disclosure, the updating module 1220 includes an image determining module and a replacing module. The image determining module is configured to determine determining a target virtual image of the virtual human object based on the target action. The virtual human object is configured as the target action. The replacing module is configured to replace a portion associated with the human object in the input image with the target virtual image.

According to an example embodiment of the present disclosure, the image determining module includes determining a body part of the human object in the input image; updating a rendering direction of a material of the virtual object based on the body part; and generating the target virtual image based on the updated rendering direction.

According to an example embodiment of the present disclosure, the apparatus 1200 further includes an obtaining module. The obtaining module includes: a representing module configured to represent the dimension of the human object based on a first set of image key points in a first training image including the human object; a generating module configured to generate the virtual human object based on the dimension of the human object, the virtual human object including the set of spatial points respectively corresponding to the first set of image key points; and an action determining module configured to determine the action model based on the first set of image key points and the set of spatial points.

According to an example embodiment of the present disclosure, the generating module includes: a position determining module configured to determine a position of the set of spatial points based on a position relationship of the first set of image key points; and an orientation determining module configured to determine an orientation of the set of spatial points based on an orientation relationship of the first set of image key points.

According to an example embodiment of the present disclosure, the first set of image key points respectively corresponds to a set of joint points of the human object, and the set of spatial points includes a set of joint points respectively corresponding to the virtual human object associated with the set of joint points of the human object.

According to an example embodiment of the present disclosure, the obtaining module includes: a predicting module, configured to determine a predicted action of the human object in a second training image based on the action model and the second training image including the human object; an image predicting module, configured to determine a predicted virtual image of the virtual human object based on the predicted action; and a model updating module, configured to update the action model based on a comparison of the predicted virtual image and a portion associated with the human object in the second training image.

According to an example implementation of the present disclosure, the predicting module includes: a key point obtaining module configured to obtain a set of joint points of the human object in the second training image; and a joint point based predicting module configured to determine the predicted action based on the set of joint points of the human object in the second training image and the action model.

According to an example embodiment of the present disclosure, the predicted action is represented with a set of predicted spatial points of the virtual human object, and the image predicting module includes: a configuring module, configured to configure an orientation of the set of joint points of the virtual human object respectively as an orientation of the set of predicted spatial points; and an orientation based image predicting module, configured to determine the predicted virtual image of the virtual human object based on the set of configured joint points.

According to an example embodiment of the present disclosure, the updating module includes: a spatial point predicting module configured to determine a set of predicted image spatial points in the predicted virtual image that respectively correspond to the set of joint points; and a distance-based updating module configured to update the action model based on a distance between a predicted image spatial point in the set of predicted image spatial points and a corresponding image key point in the second set of image key points.

According to an example embodiment of the present disclosure, the apparatus 1200 further includes: an adjusting module, configured to adjust the orientation of the set of spatial points of the virtual human object based on the comparison of the predicted virtual image and the portion associated with the human object in the second training image.

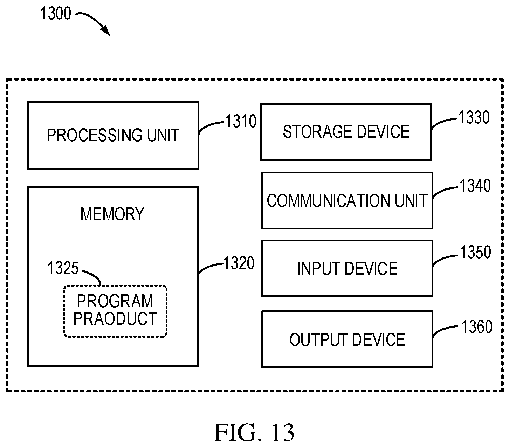

FIG. 13 illustrates a block diagram of a device 1300 capable of implementing various implementations of the present disclosure. It should be understood that the computing device 1300 illustrated in FIG. 13 is merely an example and should not constitute any limitation on the functionality and scope of the implementations described herein. The computing device 1300 illustrated in FIG. 13 may be configured to implement the method described above.

As illustrated in FIG. 13, the computing device 1300 is in the form of a general-purpose computing device. Components of the computing device 1300 may include, but are not limited to, one or more processors or processing units 1310, a memory 1320, a storage device 1330, one or more communication units 1340, one or more input devices 1350, and one or more output devices 1360. The processing unit 1310 may be an actual or virtual processor and capable of performing various processes according to programs stored in the memory 1320. In multiprocessor systems, multiple processing units execute computer-executable instructions in parallel to improve parallel processing capabilities of computing device 1300.

Computing device 1300 typically includes a plurality of computer storage media. Such media may be any available media accessible by the computing device 1300, including, but not limited to, volatile and non-volatile media, removable and non-removable media. The memory 1320 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1330 may be a removable or non-removable medium and may include a machine-readable medium, such as a flash drive, magnetic disk, or any other medium, which may be capable of storing information and/or data (e.g., training data for training) and may be accessed within computing device 1300.

The computing device 1300 may further include additional removable / non-removable, volatile / non-volatile storage media. Although not illustrated in FIG. 13, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not illustrated) by one or more data media interfaces. The memory 1320 may include a computer program product 1325 having one or more program modules configured to perform various methods or actions of various implementations of the present disclosure.

The communications unit 1340 implements communications with other computing devices over a communications medium. Additionally, the functionality of components of the computing device 1300 may be implemented in a single computing cluster or multiple computing machines capable of communicating over a communication connection. Thus, the computing device 1300 may operate in a networked environment using logical connections with one or more other servers, network personal computers (PCs), or another network node.

The input device 1350 may be one or more input devices such as a mouse, a keyboard, a trackball, or the like. The output device 1360 may be one or more output devices, such as a display, a speaker, a printer, or the like. Computing device 1300 may also communicate with one or more external devices (not illustrated) as needed, external devices such as storage devices, display devices, etc., communicate with one or more devices that enable a user to interact with computing device 1300, or communicate with any device (e.g., network card, modem, etc.) that enables computing device 1300 to communicate with one or more other computing devices. Such communication may be performed via an input/output (I/O) interface (not illustrated).

According to example implementations of the present disclosure, a computer-readable storage medium having computer-executable instructions stored thereon is provided. The computer-executable instructions are executable by a processor to implement the method described above. According to example implementations of the present disclosure, a computer program product is further provided. The computer program product is tangibly stored on a non-transitory computer-readable medium and includes computer-executable instructions. The computer-executable instructions are executable by a processor to implement the method described above. According to example implementations of the present disclosure, a computer program product having a computer program stored thereon is provided. When the computer program is executed by a processor, the method described above is performed.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for recognizing a human action, comprising:
in response to receiving an input image comprising a human object, determining a target action associated with the human object in the input image based on an action model, the action model describing an association relationship between an image comprising a human object and an action of the human object in the image, the action being represented by a set of spatial points in a virtual human object corresponding to the human object, and a dimension of the virtual human object matching a dimension of the human object; and
updating the input image with the virtual human object performing the target action.

2. The method of claim 1, wherein updating the input image comprises:
determining a target virtual image of the virtual human object based on the target action, the virtual human object being configured as the target action; and
replacing a portion associated with the human object in the input image with the target virtual image.

3. The method of claim 2, wherein determining the target virtual image comprises:
determining a body part of the human object in the input image;
updating a rendering direction of a material of the virtual object based on the body part; and
generating the target virtual image based on the updated rendering direction.

4. The method of claim 1, further comprising obtaining the action model by:
representing the dimension of the human object based on a first set of image key points in a first training image comprising the human object;
generating the virtual human object based on the dimension of the human object, the virtual human object comprising the set of spatial points respectively corresponding to the first set of image key points; and
determining the action model based on the first set of image key points and the set of spatial points.

5. The method of claim 4, wherein generating the virtual human object comprises at least one of:
determining a position of the set of spatial points based on a position relationship of the first set of image key points; and
determining an orientation of the set of spatial points based on an orientation relationship of the first set of image key points.

6. The method of claim 5, wherein the first set of image key points respectively corresponds to a set of joint points of the human object, and the set of spatial points comprises a set of joint points respectively corresponding to the virtual human object associated with the set of joint points of the human object.

7. The method of claim 6, wherein obtaining the action model comprises:
determining a predicted action of the human object in a second training image based on the action model and the second training image comprising the human object;
determining a predicted virtual image of the virtual human object based on the predicted action; and
updating the action model based on a comparison of the predicted virtual image and a portion associated with the human object in the second training image.

8. The method of claim 7, wherein determining the predicted action comprises:
obtaining a set of joint points of the human object in the second training image; and
determining the predicted action based on the set of joint points of the human object in the second training image and the action model.

9. The method of claim 7, wherein the predicted action is represented with a set of predicted spatial points of the virtual human object, and determining the predicted virtual image comprises:
configuring an orientation of the set of joint points of the virtual human object respectively as an orientation of the set of predicted spatial points; and
determining the predicted virtual image of the virtual human object based on the set of configured joint points.

10. The method of claim 9, wherein updating the action model comprises:
determining a set of predicted image spatial points in the predicted virtual image that respectively correspond to the set of joint points; and
updating the action model based on a distance between a predicted image spatial point in the set of predicted image spatial points and a corresponding image key point in the second set of image key points.

11. The method of claim 7, further comprising:
adjusting the orientation of the set of spatial points of the virtual human object based on the comparison of the predicted virtual image and the portion associated with the human object in the second training image.

12. An apparatus for recognizing a human action, comprising:
a determining module configured to in response to receiving an input image comprising a human object, determine a target action associated with the human object in the input image based on an action model, the action model describing an association relationship between an image comprising a human object and an action of the human object in the image, the action being represented by a set of spatial points in a virtual human object corresponding to the human object, and a dimension of the virtual human object matching a dimension of the human object; and
an updating module configured to update the input image with the virtual human object performing the target action.

13. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 11.

14. A computer-readable storage medium having a computer program stored thereon which, when executed by a processor, causes the processor to perform the method of any of claims 1 to 11.
